Europäisches Patentamt

European Patent Office

Office européen des brevets

(19)

(11) Veröffentlichungsnummer: **0 108 917**
**B1**

(12) # EUROPÄISCHE PATENTSCHRIFT

(45) Veröffentlichungstag der Patentschrift:
07.01.88

(51) Int. Cl.⁴: **B 25 B 1/22**, F 16 B 2/06

(21) Anmeldenummer: **83110000.3**

(22) Anmeldetag: **06.10.83**

(54) **Höhenverstellbarer Träger für Schraubstöcke und dergleichen.**

(30) Priorität: **13.10.82 DE 3238024**

(43) Veröffentlichungstag der Anmeldung:
**23.05.84 Patentblatt 84/21**

(45) Bekanntmachung des Hinweises auf die Patenterteilung:
**07.01.88 Patentblatt 88/1**

(84) Benannte Vertragsstaaten:
**AT DE FR GB IT**

(56) Entgegenhaltungen:
**FR - A - 2 165 360**
**GB - A - 1 582 635**
**GB - A - 2 085 766**
**US - A - 2 752 173**

(73) Patentinhaber: **Schlegel GmbH, Industriegebiet,**
**D-7110 Öhringen (DE)**

(72) Erfinder: **Schlegel, Wolfgang, Brechdarrweg 66,**
**D-7110 Öhringen (DE)**
Erfinder: **Wilke, Arthur, Steinheckenstrasse 24,**
**D-7107 Bad Friedrichshall (DE)**

(74) Vertreter: **Speidel, Eberhardt,**
**Postfach 1320 Waldpromenade 26, D-8035 Gauting (DE)**

## Beschreibung

Die Erfindung bezieht sich auf einen höhenverstellbaren Träger für einen Schraubstock, eine Montageplatte oder dgl. gemäss dem Oberbegriff des Anspruchs 1.

Mit derartigen z. B. aus der GB-A-2 085 766 bekannten Trägern kann der Schraubstock bzw. die Montageplatte sowohl vertikal auf die günstigste Arbeitshöhe eingestellt als auch gedreht werden, um das eingespannte Werkstück bzw. das zu montierende Gerät von jeder Seite bearbeiten bzw. montieren zu können. Oftmals ist bei derartigen höhenverstellbaren Trägern eine auf die Tragsäule wirkende Gasfeder vorgesehen, die sich am einen relativ zur Klemmeinrichtung festen Teil abstützt und eine nach aufwärts gerichtete Kraft ausübt, um das Gewicht des Schraubstocks mit dem eingespannten Werkstück bzw. der Montageplatte mit dem zu montierenden Gerät zumindest zu kompensieren, so dass eine Höhenverstellung nach oben wenig Kraft erfordert.

Ein Hauptproblem bei derartigen höhenverstellbaren Trägern besteht darin, ohne übermässigen Kraftaufwand eine grosse Klemmkraft zu erzeugen, um eine unbeabsichtigte Drehung der Tragsäule und des darauf angeordneten Schraubstocks bei einseitiger Bearbeitung des eingespannten Werkstückes mit Sicherheit zu vermeiden. Bei dem bekannten Träger werden die Abstützmittel auf der einen Seite der Klemmschalen von drei senkrecht untereinander angeordneten Fortsätzen an der einen Klemmschale gebildet, die in entsprechende Schlitze in der anderen Klemmschale eingreifen. Da die Klemmschalen aus Kostengründen einfache Gussteile sind, die nicht mehr bearbeitet werden, ist es fast ausgeschlossen, dass die Fortsätze derart mit den Schlitzen zusammenwirken, dass die Klemmschalen genau parallel zueinander liegen. Dies ist jedoch eine Voraussetzung für ein einwandfreies Umfassen und Festklemmen der Tragsäule ohne übermässigen Kraftaufwand. Toleranzen der Tragsäule, der Klemmschalen und der Abstützmittel könnten nur dadurch ausgeglichen werden, dass die Fortsätze und die Schlitze bearbeitet werden, was jedoch kostenmässig nicht tragbar wäre.

Der Erfindung liegt die Aufgabe zugrunde, einen höhenverstellbaren Träger gemäss dem Oberbegriff des Anspruchs 1 zu schaffen, dessen Klemmeinrichtung so ausgebildet ist, dass auf einfache Weise ein einwandfreies Umfassen der Trasäule erreicht und dadurch mit einem relative geringen Kraftaufwand eine grosse Haltekraft gegen Verdrehen desselben ausgeübt wird.

Zur Lösung dieser Aufgabe wird erfindungsgemäss vorgeschlagen, dass zwei einstellbare Abstützmittel in einem senkrechten Abstand untereinander angeordnet sind und die Klemmschraube auf der anderen Seite im wesentlichen in der Mitte zwischen den beiden horizontalen Ebenen, in denen die Abstützmittel liegen, vorgesehen ist.

Durch die Anordnung von zwei einstellbaren Abstützstellen können die Klemmschalen schon in der Fabrik so genau zueinander justiert werden, dass eine einwandfreie Parallelität zwischen den Klemmschalen und der Tragsäule erreicht wird. Die einstellbaren Abstützmittel gestatten darüber hinaus den Ausgleich von Toleranzen der Tragsäule und der Klemmschalen. Da im Gegensatz zu der bekannten Dreipunkt-Abstützung, die statisch unbestimmt ist, bei der Erfindung gewährleistet ist, dass beide Abstützstellen tragen, wird in Verbindung mit der Anordnung der Klemmschraube in der Mitte zwischen den Abstützstellen erreicht, dass die Wirkungslinien zwischen den Abstützstellen und der Klemmstelle nicht senkrecht zur Längsmittelachse der Tragsäule, sondern schräg zu dieser, und zwar entlang einer Schraubenlinie, verlaufen, so dass ein wesentlich grösserer Widerstand gegen eine Verdrehung ersteht als bei Klemmeinrichtungen, bei denen ein Abstützpunkt in der gleichen Ebene wie der Klemmpunkt vorgesehen ist.

Nach einem weiteren Vorschlag der Erfindung kann zwischen der Klemmutter und der Aussenfläche der benachbarten Klemmschale ein Stützbügel vorgesehen sein, der an einer oberhalb und an einer unterhalb der Klemmschale liegenden Stelle auf der Aussenfläche der Klemmschale aufliegt. Dadurch ergeben sich zwei Klemmstellen, die wiederum gegenüber den Abstützstellen derart senkrecht versetzt sind, dass die Wirkungslinien zwischen den Abstützstellen und den Klemmstellen schräg zur Längsmittelachse der Tragsäule verlaufen, um die vorher beschriebene Wirkung zu erreichen. Um ein unbeabsichtigtes Verdrehen des Stützbügels beim Festziehen der Klemmutter zu vermeiden, kann an der Aussenfläche der Klemmutter eine Verdrehsicherung mit dem Stützbügel vorgesehen sein. Diese Verdrehsicherung kann von Vorsprüngen gebildet sein, die den Stützbügel in einer zur Längsmittelachse der Tragsäule parallelen Stellung halten.

Die Abstützmittel werden normalerweise von Schrauben gebildet, die sich durch Bohrungen in beiden Klemmschalen erstrecken und deren Köpfe mit der Aussenfläche der einen Klemmschale und deren Muttern mit der Aussenfläche der anderen Klemmschale zusammenwirken. Um nach dem Lösen bzw. Lockern der Klemmschraube die Klemmung auf Null abzubauen, ohne dass der Benützer etwas besonderes dazu tun muss, ist es zweckmässig, dass die Auflagefläche zwischen den Muttern und der Aussenfläche der betreffenden Klemmschale linienförmig ist und bevorzugt parallel zur Längsmittelachse der Tragsäule läuft. Dadurch ist eine gewisse Schwenkbeweglichkeit der Klemmschalen relativ zueinander nach dem Lösen bzw. Lockern der Klemmschraube erreicht. Alternativ können die miteinander zusammenwirkenden Auflageflächen der Mutter einerseits und der Aussenfläche der Klemmschraube andererseits ballig bzw. hohlkegelförmig ausgebildet sein. Auch hierdurch wird die gewünschte Schwenkbeweglichkeit der Klemmschalen relativ zueinander erreicht.

Einige Ausührungsbeispiele der Erfindung werden im folgenden unter Bezugnahme auf die Zeichnungen beschrieben. Es zeigt:

Fig. 1 eine Vorderansicht eines höhenverstellbaren Trägers,

Fig. 2 eine Seitenansicht des in Fig. 1 gezeigten Trägers von rechts,

Fig. 3 einen Schnitt entlang Linie 3–3 in Fig. 2,

Fig. 4 eine Vorderansicht eines höhenverstellbaren Trägers entsprechend Fig. 1 in einer zweiten Ausführungsform,

Fig. 5 eine Seitenansicht des in Fig. 4 dargestellten Trägers von rechts,

Fig. 6 eine Teilansicht einer Klemmschale, teilweise geschnitten, mit eine Schwenkbewegung zulassenden Abstützmitteln,

Fig. 7 eine Ansicht ähnlich Fig. 6 mit anders ausgebildeten Abstützmitteln,

Fig. 8 eine Ansicht ähnlich Fig. 6 mit einer eine Schwenkbewegung zulassenden Ausbildung der Auflagefläche der Abstützmittel an der Klemmschale und

Fig. 9 eine Draufsicht der Klemmschale von Fig. 8.

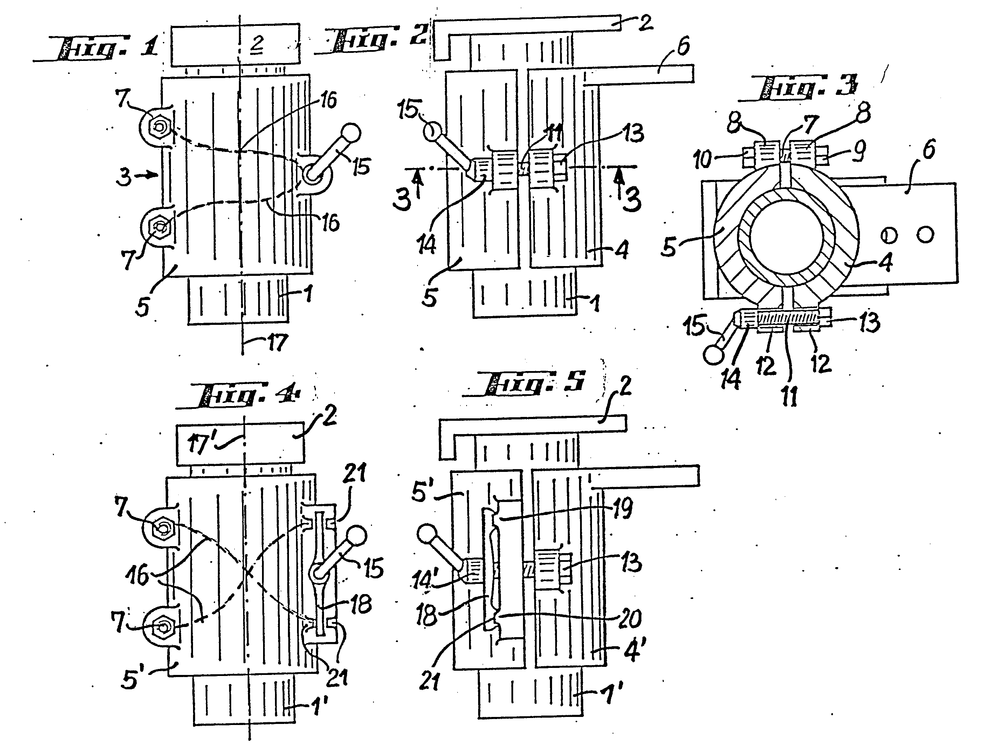

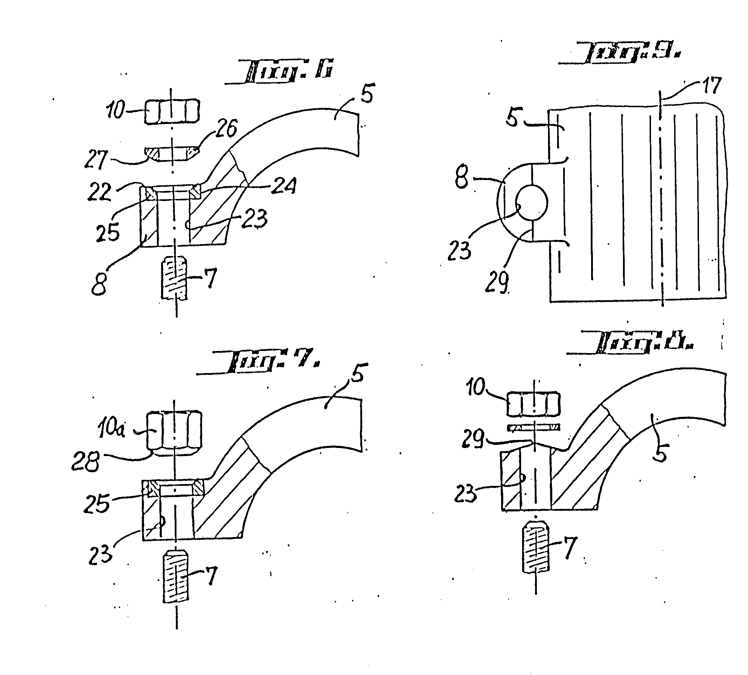

Es sei zunächst auf die Fig. 1 bis 3 Bezug genommen, in denen ein höhenverstellbarer Träger dargestellt ist, der eine senkrechte Tragsäule 1 aufweist, die an ihrem oberen Ende eine Platte 2 trägt, auf der ein Schraubstock, eine Montageplatte oder dgl. befestigt ist. Die Tragsäule 1 erstreckt sich durch eine Klemmeinrichtung 3, die aus zwei Klemmschalen 4 und 5 besteht, von denen die Klemmschale 4 ortsfest ist und einen Ansatz 6 aufweist, mit dem die Klemmeinrichtung 3 beispielsweise an einem Werktisch befestigt werden kann. Die beiden Klemmschalen 4 und 5 sind auf der einen Seite durch zwei Abstützmittel in Form von Schrauben 7 miteinander verbunden, die sich durch Bohrungen in an den Klemmschalen 4 und 5 angeformten Augen 8 hindurcherstrecken. Ihre Schraubenköpfe 9 liegen an der Aussenfläche der Klemmschale 4 und ihre Muttern 10 liegen an der Aussenfläche der Klemmschale 5 auf. Auf der anderen Seite der Klemmschalen 4, 5 ist eine Klemmschale 11 vorgesehen, die sich durch Bohrungen in den an die Klemmschalen angeformten Augen 12 hindurcherstreckt, mit ihrem Schraubenkopf 13 an der Aussenfläche der Klemmschale 4 und mit ihrer Mutter 14 an der Aussenfläche der Klemmschale 5 aufliegt. Die Klemmschraube 14 ist mit einem Handgriff 15 versehen.

Durch die Anordnung von zwei untereinander liegenden Abstützstellen in Form der Schrauben 7 und einer gegenüber und dazwischen liegenden Klemmstelle in Form der Klemmschraube 11 wirken die beim Anziehen der Klemmschraube 11 erzeugten Klemmkräfte bevorzugt entlang gestrichelt eingezeichneten Wirkungslinien 16. Diese Wirkungslinien 16 verlaufen schräg zur Längsmittelachse 17 der Tragsäule 1, so dass einer Drehung der Tragsäule 1 grösserer Widerstand entgegengesetzt wird als bei Anordnung nur eines Abstützpunktes, der auf der gleichen Ebene liegt wie der Klemmpunkt. Damit kann ein unbeabsichtigtes Verdrehen der Tragsäule 1 schon bei Anwendung einer relativ geringen Kraft zum Festziehen der Klemmutter 14 verhindert werden.

Bei dem Ausführungbeispiel gemäss Fig. 4 und 5 ist zwischen der Klemmutter 14' und der Aussenfläche der Klemmschale 5' ein Stützbügel 18 vorgesehen, der an zwei Stellen 19 und 20 oberhalb bzw. unterhalb der Klemmschraube 11' an der Aussenfläche der Klemmschale 5' anliegt. Dadurch ergeben sich die in Fig. 4 gestrichelt eingezeichneten Hauptwirkungslinien 16' der Klemmkräfte, die wiederum schräg, nämlich geometrisch entlang einer Gewindesteigung, zur Längsmittelachse 17' der Tragsäule 1' verlaufen, so dass ein noch grösserer Widerstand gegen Verdrehung der Tragsäule 1' bei geringem Kraftaufwand wie bei der Ausführung gemäss Fig. 1 bis 3 erreicht wird. Um ein Verdrehen des Stützbügels 18 beim Anziehen der Klemmschraube 14' zu verhindern, sind an der Aussenfläche der Klemmschale 5' Vorsprünge 21 vorgesehen, zwischen denen der Stützbügel 18 liegt.

Obgleich grundsätzlich auch andere Abstützmittel beispielsweise in Form von Haken und Ösen, vorgesehen werden können, werden die dargestellten Schrauben 7 mit Köpfen 9 und Muttern 10 bevorzugt. Um die Höhenverstellung und ein Verdrehen des Tragrohres 1 bzw. 1' nach dem Lösen bzw. Lockern der Klemmutter 14 bzw. 14' zu erleichtern, hat es sich als zweckmässig erwiesen, eine gewisse Schwenkbarkeit zwischen den Klemmschalen 4 und 5 bzw. 4' und 5' zu ermöglichen. Zu diesem Zweck ist bei dem Ausführungsbeispiel gemäss Fig. 6 in der Aussenfläche 22 der Klemmschale 5 eine die Durchgangsbohrung 23 zur Aufnahme der Schraube 7 umgebende Ausnehmung 24 vorgesehen, in der eine Hohlkegelpfanne 25 eingesetzt ist. Zwischen der Mutter 10 und der Hohlkegelpfanne 25 ist eine Beilagscheibe 26 mit balliger Unterseite 27 angeordnet. Durch das Zusammenwirken der balligen Beilagscheibe 26 mit der Hohlkegelpfanne 25 wird die Möglichkeit geschaffen, dass sich die Klemmschale 5 nach Lockern der Klemmschraube 14 relativ zur Klemmschale 4 geringfügig, d.h. im Rahmen des Spiels zwischen der Schraube 7 und der Bohrung 23, schwenken lässt, wodurch die Klemmung sofort abgebaut wird.

Das Ausführungsbeispiel gemäss Fig. 7 unterscheidet sich von demjemigen gemäss Fig. 6 lediglich dadurch, dass die Beilagscheibe 26 in Fortfall kommt und die Mutter 10a eine ballige Unterseite 28 aufweist und direkt mit der Hohlkegelpfanne 25 zusammenwirkt.

Bei dem Ausführungsbeispiel gemäss Fig. 9 und 10 wird die relative Schwenkbarkeit zwischen den Klemmschalen 4 und 5 dadurch bewirkt, dass die Mutter 10 nur entlang einer Linie an der Aussenfläche der Klemmschale 5 aufliegt. Diese Berührungslinie 29 verläuft parallel zur Längsmittelachse 17 der Tragsäule. Die Auflagelinie 29 bildet die Schwenkachse, um die die Klemmschale 5 relativ zur Klemmschale 4 im Rahmen des Spiels zwischen der Schraube 7 und der Bohrung 23 schwenken kann.

## Patentansprüche

1. Höhenverstellbarer Träger für einen Schraubstock, eine Montageplatte oder dergl., mit einer senkrechten Tragsäule (1 bzw.1') und einer an einem Werktisch anbringbaren Klemmeinrichtung (3), die zwei halbzylindrische, die Tragsäule umgreifende Klemmschalen (4, 5) aufweist, welche auf der einen Seite durch Abstützmittel (7, 9, 10) miteinander verbunden und auf der anderen Seite durch eine Klemmschraube (11) zusammenspannbar sind, die einen sich auf der Aussenfläche der einen Klemmschale (4) abstützenden Kopf (13) und eine sich auf der Aussenfläche der anderen Klemmschale (5) abstützende Klemmutter (14) mit Handgriff (15) aufweist, dadurch gekennzeichnet, dass zwei einstellbare Abstützmittel (7, 9, 10) in einem senkrechten Abstand untereinander angeordnet sind und die Klemmschraube (11 bzw. 11') auf der andern Seite im wesentlichen in der Mitte zwischen den beiden horizontalen Ebenen, in denen die Abstützmittel liegen, vorgesehen ist.

2. Träger nach Anspruch 1, dadurch gekennzeichnet, dass zwischen der Klemmutter (14') und der Aussenfläche der benachbarten Klemmschale (5) ein Stützbügel (18) vorgesehen ist, der an einer oberhalb und an einer unterhalb der Klemmschraube liegenden Stelle (19 bzw. 20) auf der Aussenfläche der Klemmschale (5) aufliegt.

3. Träger nach Anspruch 2, dadurch gekennzeichnet, dass der Abstand zwischen den Auflagestellen (19, 20) des Stützbügels (18) grösser oder kleiner ist als der Abstand zwischen den Abstützmitteln (7, 9, 10).

4. Träger nach Anspruch 3 oder 4, dadurch gekennzeichnet, dass an der Aussenfläche der Klemmschale (5) eine Verdrehsicherung (21) für den Stützbügel (18) vorgesehen ist.

5. Träger nach einem oder mehreren der vorhergehenden Ansprüche, bei dem die Abstützmittel von Schrauben gebildet sind, die sich durch Bohrungen in beiden Klemmschalen erstrecken und deren Köpfe mit der Aussenfläche der einen Klemmschale und deren Muttern mit der Aussenfläche der anderen Klemmschale zusammenwirken, dadurch gekennzeichnet, dass die Auflagefläche (29) zwischen den Muttern (10) und der Aussenfläche der betreffenden Klemmschale (5) linienförmig ist (Fig. 8, 9).

6. Träger nach Anspruch 5, dadurch gekennzeichnet, dass die linienförmige Auflagefläche (29) parallel zur Längsmittelachse (17) der Tragsäule (1) verläuft.

7. Träger nach dem Oberbegriff des Anspruchs 5, dadurch gekennzeichnet, dass die miteinander zusammenwirkenden Auflageflächen der Mutter (10 bzw. 10a) einerseits und der Aussenfläche (22) der Klemmschale (5) andererseits ballig bzw. hohlkegelförmig sind (Fig. 6, 7).

8. Träger nach Anspruch 7, dadurch gekennzeichnet, dass die Aussenfläche (22) der betreffenden Klemmschale (5) Ausnehmungen (24) zur Aufnahme einer Hohlkegelpfanne (25) aufweist und die damit zusammenwirkende Unterseite (28) der Mutter (10a) ballig ist, oder dass eine Beilagscheibe (26) mit balliger Unterseite (27) zwischen der Mutter (10) und der Hohlkegelpfanne (25) angeordnet ist.

## Claims

1. A vertically adjustable support for a vise, an assembly platform or the like, comprising a vertical support tube (1; 1') and a clamping device (3) for attachment to a work bench comprising two semicylindrical clamping shells (4, 5) which surround the support tube and which are interconnected on one side support means (7, 9, 10) and can be clamped together on the other side by a clamping screw (11) which comprises a head (13) which abuts against the outer surface of one shell (4) and a nut (14) with handle (15) which abuts against the outer surface of the other shell (5), characterized in that two adjustable support means (7, 9, 10) are arranged in a vertical distance from each other and that the clamping screw (11; 11') on the other side is provided essentially in the middle between the two horizontal planes in which the support means are lying.

2. Support according to claim 1 characterized in that a yoke (18) is provided between the clamping nut (14') and the outer surface of the adjacent shell (5), said yoke having two points of contact (19, 20), one above and one below said clamping screw, with the outer surface of said shell (5).

3. Support according to claim 2, characterized in that the distance between the two points of contact (19, 20) of the yoke (18) is bigger or smaller than the distance between the support means (7, 9, 10).

4. Support according to claim 3 or 4, characterized in that turning preventing device (21) for the yoke (18) is provided on the outer surface of the clamping shell (5).

5. Support according to any of the preceding claims whereby the support means are screws which extend through bores in both clamping shells with their heads cooperating with the outer surface of one shell and their nuts cooperating with the outer surface of the other shell, characterized in that the contact face (29) between the nuts (10) and the outer surface of the respective shell (5) is linear (Figs. 8, 9)

6. Support according to claim 5, characterized in that the linear contact face (29) extends in parallel to the longitudinal central axis (17) of the support tube (1).

7. Support according to the preamble of claim 5, characterized in that the cooperating contact faces of the nut (10; 10a) on one hand and the outer surface (22) of the clamping shell (5) on the other hand are spherical and conical, respectively (Figs. 6, 7).

8. Support according to claim 7, characterized in that the outer surface (22) of the respective shell (5) comprises recesses (24) for accomodating hollow cone inserts (25) and that the lower side (28) of the nuts (10a) cooperating therewith is spherical or that a washer (26) with a spherical lower side (27) is arranged between the nut (10) and the insert (25).

## Revendications

1. Support réglable en hauteur pour un étau, une plaque d'assemblage ou similaires, muni d'une colonne-support (1 ou 1') verticale et d'un dispositif de serrage (3) pouvant être fixé sur un établi et présentant deux enveloppes de serrage (4, 5) demi-cylindriques entourant la colonne-support et resserrables d'un côté par des éléments de maintien (7, 9, 10) et de l'autre par un boulon de serrage (11) dont la tête (13) repose sur la surface externe de l'une des enveloppes de serrage (4) et l'écrou (14), muni d'une poignée (15), vient s'appuyer sur la surface externe de l'autre enveloppe de serrage (5), caractérisé en ce que deux éléments de maintien (7, 9, 10) réglables sont placés sur un même axe vertical et que le boulon de serrage (11 ou 11') situé de l'autre côté est disposé approximativement au milieu du segment vertical séparant les deux niveaux horizontaux sur lesquels se trouvent les éléments de maintien.

2. Support selon la revendication 1, caractérisé en ce qu'un étrier-support (18), appuyant sur deux saillies (19 et 20) de la surface externe de l'enveloppe de serrage (5) contiguë situées respectivement au-dessus et en dessous du boulon de serrage, est prévu entre l'écrou de serrage (14') et la surface externe de l'enveloppe de serrage (5).

3. Support selon la revendication 2, caractérisé en ce que l'écartement des saillies (19, 20) sur lesquelles repose l'étrier-support est inférieur ou supérieur à l'écartement des éléments de maintien (7, 9, 10).

4. Support selon la revendication 3 ou 4, caractérisé en ce qu'un dispositif (21) protégeant l'étrier-support (18) contre les torsions est prévu sur la surface externe de l'enveloppe de serrage (5).

5. Support selon l'une ou plusieurs des revendications précédentes, sur lequel les éléments de serrage sont constitués de boulons qui pénètrent dans les deux enveloppes de serrage par deux orifices et dont les têtes appuient sur la surface externe de l'une des enveloppes de serrage et les écrous sur la surface externe de l'autre, caractérisé en ce que la face d'appui (29) entre les écrous (10) et la surface externe de l'enveloppe de serrage (5) correspondante est linéaire (fig. 8, 9).

6. Support selon la revendication 5, caractérisé en ce que la face d'appui (29) linéaire est disposée parallèlement à l'axe longitudinal médian (17) de la colonne-support (1).

7. Support selon le principe de la revendication 5, caractérisé en ce que les faces d'appui des écrous (10 ou 10a) d'une part et les faces d'appui correspondantes de la surface externe (22) de l'enveloppe de serrage d'autre part sont respectivement convexes et concaves.

8. Support selon la revendication 7, caractérisé en ce que la surface externe (22) de l'enveloppe de serrage (5) considérée présente des évidements (24) prévus pour la mise en place d'une rondelle à rotule concave (25) et que la face inférieure (28) de l'écrou (10a) venant appuyer dessus est convexe ou qu'une rondelle de calage (26) à face inférieure convexe (27) est placée entre l'écrou (10) et la rondelle à rotule concave (25).

Fig. 1

Fig. 2

Fig. 3

Fig. 4

Fig. 5

Fig. 6

Fig. 7

Fig. 8

Fig. 9

0 108 917